# EUROPÄISCHE PATENTANMELDUNG

(11) **EP 4 201 589 A1**
(43) Veröffentlichungstag der Anmeldung: **28.06.2023**
(21) Anmeldenummer: 21217582.2
(22) Anmeldetag: 23.12.2021
(51) Int. Cl.: B23Q 37/00, A61C 13/00

(54) **MODULARE DENTALFRÄSMASCHINE**

(71) Anmelder: VHF Camfacture AG, 72119 Ammerbuch (DE)
(72) Erfinder: Butschan, Jens, 73760 Ostfildern (DE)
(74) Vertreter: Zurhorst, Stefan

(57) **Zusammenfassung**

Die Erfindung betrifft eine Dentalfräsmaschine. Die Dentalfräsmaschine besteht aus einem Basismodul (20), aus einer Gehäuseverkleidung (4) und aus einer Gruppe von an das Basismodul (20) ansteckbaren Modulen (21). Der Hauptrahmen (3) ist Teil des Basismoduls (20). Die Gehäuseverkleidung (4) ist lösbar an dem Basismodul (20), insbesondere an dem Hauptrahmen (3), befestigt. Das Basismodul (20), die Gehäuseverkleidung (4) und jedes Modul (21) der Gruppe von Modulen weisen jeweils eine Masse von weniger als 31,5 kg auf.

## Beschreibung

Die Erfindung betrifft eine Dentalfräsmaschine gemäß dem Oberbegriff des Anspruchs 1.

Zur Herstellung von Zahnersatz, z. B. Kronen, Brücken oder dergleichen, werden in Dentalfräsmaschinen Rohlinge aus verschiedenen Materialien spanend bearbeitet. Derartige Dentalfräsmaschinen werden üblicherweise bei Zahntechnikern oder bei Zahnärzten eingesetzt. Die bekannten Dentalfräsmaschinen sind äußerst komplexe Systeme, die vor Ort durch einen Servicetechniker aufgebaut und in Betrieb genommen werden. Selbst verständlich kann es auch im Betrieb solcher Maschinen zu Fehlermeldungen kommen, die eine Wartung bzw. eine Reparatur durch einen Servicetechniker erfordern. Dieser Umstand setzt für den Anbieter derartiger Dentalfräsmaschinen eine aufwändige Infrastruktur von Servicetechnikern voraus. Diese Infrastruktur führt zu erhöhten Wartungs- und Servicekosten.

Der Erfindung liegt somit die Aufgabe zugrunde, eine Dentalfräsmaschine derart weiterzuentwickeln, dass diese unter nur geringen Wartungs- und Servicekosten betrieben werden kann.

Die Aufgabe bezüglich der Dentalfräsmaschine wird durch eine Dentalfräsmaschine nach den Merkmalen des Anspruchs 1 gelöst.

Die erfindungsgemäße Dentalfräsmaschine umfasst ein Gehäuse, wobei das Gehäuse einen Hauptrahmen und eine Gehäuseverkleidung umfasst. Ferner umfasst die Dentalfräsmaschine eine im Gehäuse angeordnete Frässpindel, eine Werkstückaufnahme zum Halten eines Werkstückes, ein im Gehäuse angeordnetes Antriebssystem zur Positionierung der Frässpindel und eine Steuereinrichtung zur elektrischen Versorgung und Steuerung der Frässpindel und des Antriebssystems. Die Dentalfräsmaschine besteht aus einem Basismodul, aus der Gehäuseverkleidung und aus einer Gruppe von an das Basismodul ansteckbaren Modulen. Der Hauptrahmen ist Teil des Basismoduls. Die Gehäuseverkleidung ist lösbar an dem Basismodul befestigt. Vorzugsweise ist die Gehäuseverkleidung unmittelbar am Hauptrahmen befestigt. Das Basismodul weist eine Masse von weniger als 31,5 kg auf. Auch die Gehäuseverkleidung weist eine Masse von weniger als 31,5 kg auf. Zudem weist auch jedes Modul der Gruppe von Modulen eine Masse von weniger als 31,5 kg auf.

Die einzelnen Module der Dentalfräsmaschine können auf einfache Weise an das Basismodul angesteckt werden. Somit wird eine sehr einfache Montage der Dentalfräsmaschine gewährleistet. Die Dentalfräsmaschine kann somit nicht nur durch den Servicetechniker, sondern auch durch den Anwender der Dentalfräsmaschine montiert werden. Ferner ermöglicht es der modulare Aufbau der Dentalfräsmaschine sämtliche Einzelkomponenten mit einer Masse von weniger als 31,5kg auszubilden. Zu den Einzelkomponenten zählen das Basismodul, ein jedes weitere Modul sowie die Gehäuseverkleidung. Diese Obergrenze der Masse der Einzelkomponenten orientiert sich gezielt an der Obergrenze eines maximalen Paketgewichtes herkömmlicher Paketlieferanten. Beträgt die Masse über 31,5 kg, handelt es sich üblicherweise um Sperrgut, wodurch das zu versendende Objekt anderen Auflagen unterliegt und die Sendung teurer wird. Die erfindungsgemäße Gestaltung der Dentalfräsmaschine ermöglicht ein einfaches und kostengünstiges Versenden des Basismoduls, der Gehäuseverkleidung sowie der weiteren Module.

Ferner führt die Kombination aus der Modularität der Dentalfräsmaschine sowie aus der Möglichkeit, die einzelnen Bauteilkomponenten mittels eines herkömmlichen Paketlieferanten versenden zu können, dazu, dass die Dentalfräsmaschine vor Ort durch den Anwender auf einfache Weise montiert und in Betrieb genommen werden kann. Ein Servicetechniker ist nicht erforderlich. Diese Eigenschaft der Dentalfräsmaschine ist nicht nur bis zur Inbetriebnahme, sondern auch auf den gesamten Lebenszyklus von Vorteil. Die Module sind Baugruppen, die in sich abgeschlossene Funktionseinheiten bilden. Ist ein solches Modul defekt, so dass dessen Funktion nicht mehr gegeben ist, ist es ausreichend, lediglich dieses eine defekte Modul gegen ein intaktes Modul auszutauschen. Der Anwender kann das defekte Modul aus der Dentalfräsmaschine ausbauen und an den Hersteller der Dentalfräsmaschine versenden. Dieser kann das defekte Modul reparieren und an den Anwender zurücksenden. Hat der Anwender das reparierte Modul wieder an der Dentalfräsmaschine angeschlossen, kann diese weiter betrieben werden.

Selbstverständlich kann anstelle einer Reparatur auch der Austausch des defekten Moduls durch ein neues Modul vorgesehen sein. Das neue Modul kann vom Lieferanten an den Anwender übersandt werden. Ein solcher Modulaustausch könnte vorzugsweise automatisch bei Fehlererkennung der Dentalfräsmaschine eingeleitet werden. Vorzugsweise ist die Steuereinrichtung der Dentalfräsmaschine derart ausgebildet, dass bei einer entsprechenden Fehlermeldung für ein Modul eine Information an den Lieferanten ausgegeben wird, wodurch ein Ersatzmodul unverzüglich beispielsweise mittels Paketversand geliefert wird. Die Steuereinrichtung könnte auch bei einer anstehenden Erneuerung einzelner Module, also einem Hardwareupdate, den Lieferanten analog der oben beschriebenen Vorgehensweise informieren.

In bevorzugter Ausgestaltung der Dentalfräsmaschine ist vorgesehen, dass die Masse der Dentalfräsmaschine weniger als 50 kg, insbesondere weniger als 45 kg, besonders bevorzugt weniger als 40 kg beträgt. Durch diese Ausgestaltung der Dentalfräsmaschine ist es möglich, bereits mit zwei Versandpaketen die gesamte Dentalfräsmaschine an den Anwender zu versenden. Ferner ermöglicht das geringe Gesamtgewicht der Dentalfräsmaschine eine vereinfachte Handhabung für den Anwender in montiertem Zustand der Dentalfräsmaschine. Somit ist es dem Anwender möglich, die montierte Dentalfräsmaschine von Hand ohne Hilfsmittel zu versetzen. Eine Demontage der Dentalfräsmaschine ist nicht erforderlich.

Jedes Modul ist über eine Steckverbindung an dem Basismodul befestigt. Die Steckverbindung vereinfacht dem Bediener der Dentalfräsmaschine die Montage. Es kann zweckmäßig sein, neben einer Steckverbindung zwischen Modul und Basismodul ein zusätzliches Fixierungselement vorzusehen. Ein solches Fixierungselement könnte beispielsweise eine Schraubverbindung oder ein Passstift oder dergleichen sein. Besonders bevorzugt ist ein Modul lediglich über eine Steckverbindung an dem Basismodul befestigt. Ferner ist mindestens eine Anschlusssteckverbindung für jedes Modul zur Anbindung an das Basismodul und / oder zur Anbindung an ein weiteres Modul vorgesehen. Die Anschlusssteckverbindung kann eine elektrische, pneumatische oder hydraulische Anschlusssteckverbindung sein. Sind mehrere Anschlusssteckverbindungen für ein Modul vorgesehen, können sich die Anschlussverbindungen in ihrer Art, nämlich elektrisch, pneumatisch oder hydraulisch, selbstverständlich unterscheiden.

Es ist vorteilhaft vorgesehen, dass die Steuereinrichtung als ein Modul aus der Gruppe von Modulen ausgebildet ist. Die Steuereinrichtung umfasst vorzugsweise ein integrales Netzteil. Demnach ist das Netzteil in der Steuereinrichtung verbaut. Über das Netzteil ist die Steuereinrichtung an einer Energiequelle, vorzugsweise an dem lokalen Stromnetz, angebunden. Bevorzugt ist das Netzteil ein Universalnetzteil, welches kompatibel mit Stromnetzen verschiedener Länder ist. Diese unterliegen oftmals verschiedener Spannung.

In einer alternativen Ausbildung der Dentalfräsmaschine ist die Steuereinrichtung über ein separat von der Steuereinrichtung ausgebildetes Netzteil an einer Energiequelle angeschlossen. Das separat ausgebildete Netzteil ist vorzugsweise ebenfalls als ein Modul aus der Gruppe von Modulen ausgebildet. Das Netzteil ist vorzugsweise ein länderspezifisches Netzteil und somit kostengünstig. Die modulare Ausgestaltung des Netzteils für die Steuereinrichtung erlaubt somit auf einfache Weise, spezifische Ländernetzteile an der Dentalfräsmaschine vorzusehen.

Die Gehäuseverkleidung ist insbesondere aus mehreren Gehäuseteilen vorgesehen. Die Gehäuseteile sind an dem Halterahmen lösbar befestigt. Vorzugsweise sind die Gehäuseteile zumindest teilweise, insbesondere vollständig lediglich über eine Steckverbindung an dem Halterahmen lösbar gehalten. Durch die Demontage der Gehäuseverkleidung kann eine geringe Masse des Basismoduls erzielt werden.

Die Frässpindel ist vorzugsweise als ein Modul aus der Gruppe von Modulen ausgebildet. Die Frässpindel umfasst vorzugsweise eine Werkzeugaufnahme und einen mechanisch betriebenen Linearantrieb zur Betätigung der Werkzeugaufnahme. Demnach ist die Werkzeugaufnahme nicht mittels Druckluft betrieben. Somit kann auf eine Druckluftquelle, also einen Kompressor oder dergleichen verzichtet werden.

Vorzugsweise ist die Werkstückaufnahme als ein Modul aus der Gruppe von Modulen ausgebildet. Die Werkstückaufnahme weist vorzugsweise eine Schwenkachse auf, um die ein in der Werkstückaufnahme eingespannter Rohling durch das Antriebssystem angetrieben schwenkbar ist. Die Werkstückaufnahme bildet die A-Achse der Dentalfräsmaschine und ermöglicht eine erhöhte Zugänglichkeit des Werkzeuges an dem Werkstück.

Die Dentalfräsmaschine umfasst eine als Modul aus der Gruppe von Modulen vorgesehene Absaugvorrichtung, mittels derer Späne und dergleichen aus der Dentalfräsmaschine abgesaugt werden können. Ist die Absaugvorrichtung als Modul ausgebildet, ist diese ein integraler Bestandteil der Dentalfräsmaschine, also an dem Basismodul montiert. Es kann auch alternativ vorgesehen sein, eine separat von der Dentalfräsmaschine ausgebildete Absaugvorrichtung an der Dentalfräsmaschine anzuschließen. In einer solchen Ausführung der Dentalfräsmaschine kann auf eine integrale Absaugvorrichtung verzichtet werden.

Die Dentalfräsmaschine umfasst bevorzugt eine als Modul ausgebildete Nasseinheit zur Nassbearbeitung eines Werkstückes. Durch eine solche Nasseinheit können während der Bearbeitung die Werkstücke sowie das Werkzeug unter Zuführung einer Flüssigkeit gekühlt und gereinigt werden. Die Nasseinheit umfasst vorzugsweise einen Wassertank, eine Wasserpumpe und ein Filtersystem. Die Komponenten der Nasseinheit erlauben eine permanente Flüssigkeitszufuhr bei geschlossenem Flüssigkeitskreislauf.

Vorteilhaft umfasst die Dentalfräsmaschine ein als Modul ausgebildetes Werkstückmagazin. Das Werkstückmagazin dient zur Speicherung mehrerer Rohlinge. Diese können beispielsweise aus verschiedenen Werkstoffen bestehen. In dem Werkstückmagazin können sowohl unbearbeitete als auch bearbeitete Rohlinge aufgenommen sein. Die Rohlinge werden vorzugsweise automatisch aus dem Werkstückmagazin entnommen und in der Werkstückaufnahme eingespannt. Ein solches Werkstückmagazin ermöglicht eine Erhöhung des Automatisierungsgrades bei der Bearbeitung von Werkstücken, da ein Zuführen des Rohlings von Hand in die Dentalfräsmaschine vor jedem Bearbeitungsvorgang nicht mehr erforderlich ist.

Weitere Merkmale der Erfindung ergeben sich aus der Beschreibung und der Zeichnung, in der nachfolgend ein im Einzelnen beschriebenes Ausführungsbeispiel der Erfindung dargestellt ist. Es zeigen:
- Fig. 1: eine perspektivische Darstellung der Dentalfräsmaschine,
- Fig. 2: eine perspektivische Darstellung der Dentalfräsmaschine nach Fig. 1 mit geöffneter Ladeklappe,
- Fig. 3: in einer Vorderansicht die Dentalfräsmaschine nach Fig. 1 in geschlossener Darstellung,
- Fig. 4: in perspektivischer Darstellung die Dentalfräsmaschine nach Fig. 1 in teilweise demontiertem Zustand,
- Fig. 5: in perspektivischer Darstellung die als Modul ausgebildete Werkstückaufnahme,
- Fig. 6: in perspektivischer Darstellung die als Modul ausgebildete Frässpindel mit mechanischem Linearantrieb,
- Fig. 7: in einer Vorderansicht die Frässpindel nach Fig. 6 und
- Fig. 8: in einer Schnittdarstellung die Frässpindel nach Fig. 6.

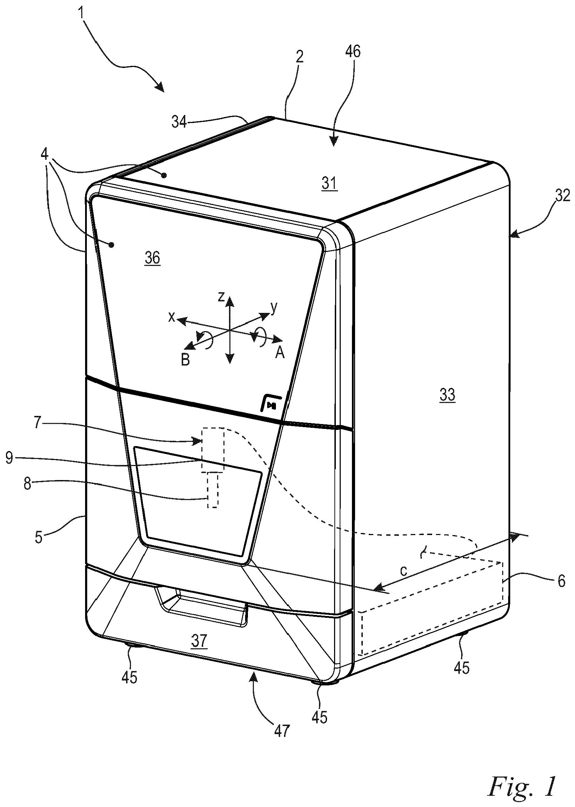

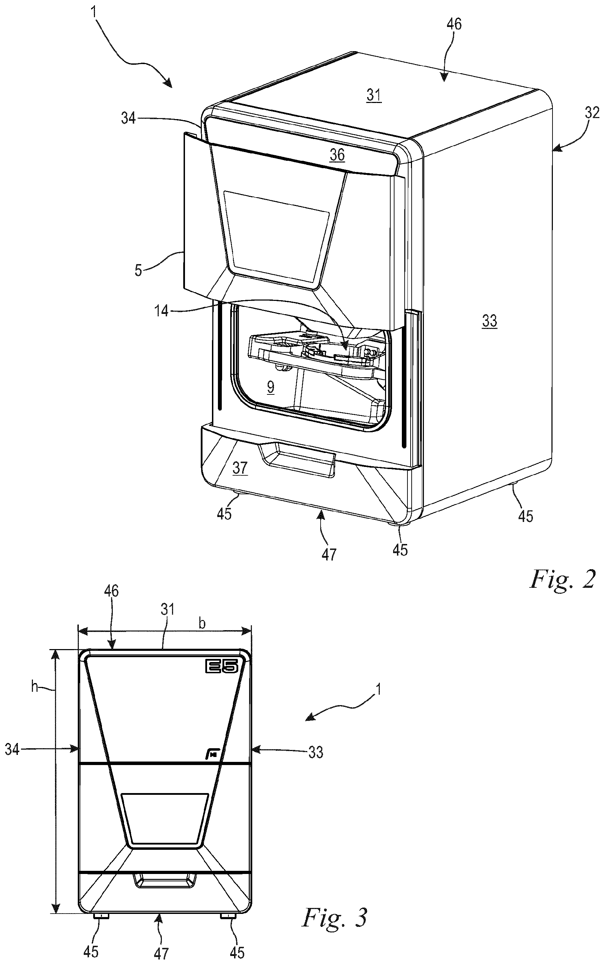

In Fig. 1 ist die Dentalfräsmaschine 1 gezeigt. Die Dentalfräsmaschine 1 ist zur Herstellung eines Zahnersatzes, insbesondere zum Fertigen von Kronen und Brücken vorgesehen. Ein solcher Zahnersatz wird aus einem Rohling 40 gefertigt. Die Dentalfräsmaschine 1 weist ein Gehäuse 2 auf, wobei das Gehäuse 2 den Innenraum der Dentalfräsmaschine 1 begrenzt. Wie in insbesondere auch in Fig. 3 gezeigt, weist das Gehäuse 2 der Dentalfräsmaschine 1 eine Oberseite 46 und eine Unterseite 47 auf. An der Unterseite 47 der Dentalfräsmaschine 1 sind mehrere Standfüße 45 angeordnet, wobei die Dentalfräsmaschine 1 auf ihren Standfüßen 45 abgestellt ist. Der Begriff "oben" gibt eine von der Unterseite 47 zur Oberseite 46 der Dentalfräsmaschine 1 verlaufende Richtung an. Der Begriff "unten" bezeichnet eine von der Oberseite 46 zur Unterseite 47 der Dentalfräsmaschine 1 verlaufende Richtung.

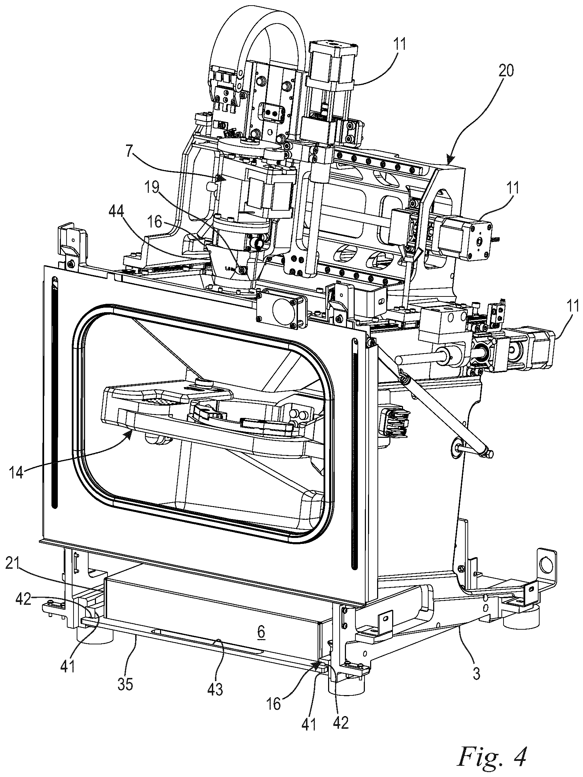

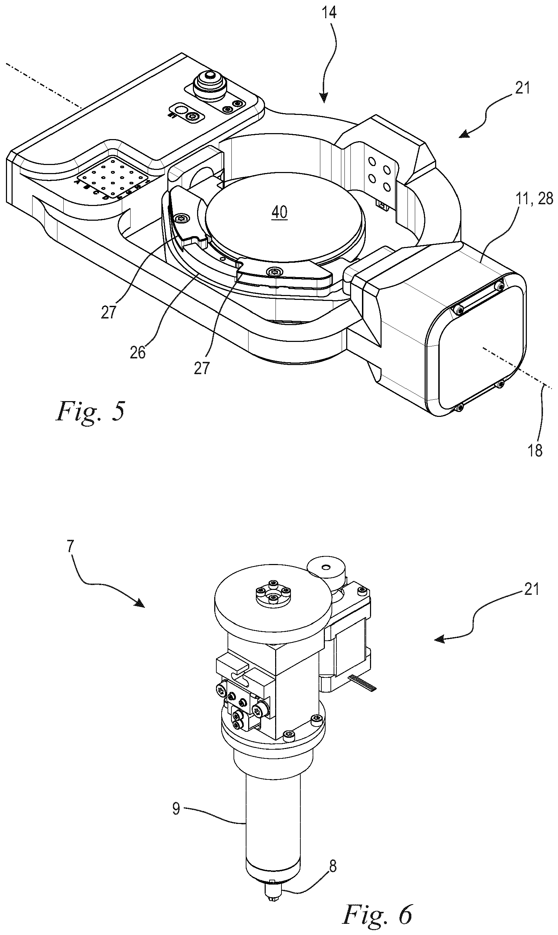

Wie in Fig. 1 schematisch dargestellt, ist in der Dentalfräsmaschine 1 eine Frässpindel 7 angeordnet. Die Frässpindel 7 umfasst einen Elektromotor 9 und eine vom Elektromotor 9 angetriebene Spindel 8 (siehe auch Fig. 6 bis 8). Die Frässpindel 7 ist im Ausführungsbeispiel über ein Antriebssystem 11 (Fig. 4) im Raum translatorisch, also in Richtung der x-, y- und z-Achsen der Dentalfräsmaschine 1 verstellbar. In einer alternativen Ausführung kann es zweckmäßig sein, dass die Frässpindel 7 neben den translatorischen Freiheitsgraden auch rotatorisch verstellbar ist. In einer solchen Ausführung ist das Antriebssystem 11 derart ausgebildet, dass die Frässpindel 7 um die Freiheitsgrade A und B, also um die x-Achse respektive um die y-Achse schwenkbar ist. Die Freiheitsgrade der Frässpindel sind in Fig. 1 schematisch angedeutet.

Wie in den Figuren 2 und 4 gezeigt, umfasst die Dentalfräsmaschine 1 eine Werkstückaufnahme 14. Die Werkstückaufnahme 14 dient zur Aufnahme und Fixierung eines Werkstückes, vorliegend eines Rohlings 40. In Fig. 5 ist die Werkstückaufnahme 14 in einem aus der Dentalfräsmaschine 1 ausgebautem Zustand gezeigt. Die Werkstückaufnahme 14 umfasst eine Halterung 26 und zwei Spannelemente 27. Die Spannelemente 27 sind an der Halterung 26 über eine Schraubverbindung gehalten. Die Halterung 26 und die Spannelemente 27 sind zueinander derart angeordnet, dass zwischen den Spannelementen 27 und der Halterung 26 der Rohling 40 eingespannt werden kann. Dabei wird der Rohling 40 über die Spannelemente 27 gegen die Halterung 26 gepresst. Alternativ kann die Werkstückaufnahme 14 derart ausgebildet sein, dass der Rohling 40 werkzeuglos beispielsweise über eine Hebelmechanik spannbar ist. Selbstverständlich kann es in einer alternativen Ausführung zweckmäßig sein, lediglich ein Spannelement oder mehr als zwei Spannelemente vorzusehen. Die Werkstückaufnahme 14 umfasst eine Schwenkachse 18. Die Halterung 26 ist gemeinsam mit den Spannelementen 27 um die Schwenkachse 18 schwenkbar ausgebildet. Die Werkstückaufnahme 14 umfasst einen Achsantriebsmotor 28, der mit der Halterung 26 und den Spannelementen 27 wirkverbunden ist. Der Achsantriebsmotor 28 kann beispielsweise als Schrittmotor oder als Servomotor ausgeführt sein. Der Achsantriebsmotor 28 ist Teil des Antriebssystems 11. Mittels des Antriebssystems 11, insbesondere mittels des Achsantriebsmotors 28, kann die Halterung 26 mit den Spannelementen 27 um die Drehachse 18 geschwenkt werden. Somit kann auch ein in der Werkzeugaufnahme 14 eingespannter Rohling 40 um die Drehachse 18 der Werkzeugaufnahme 14 geschwenkt werden. Die Werkstückaufnahme 14 bildet somit eine A-Achse der Dentalfräsmaschine 1, also einen neben den translatorischen Freiheitsgraden x, y, z einen zusätzlichen rotatorischen Freiheitsgrad um die x-Achse der Dentalfräsmaschine 1. Somit wird eine erhöhte Zugänglichkeit für das Werkzeug an dem Rohling 40 erzeugt.

Wie in den Figuren 1 bis 4 gezeigt, umfasst das Gehäuse 2 einen Hauptrahmen 3 und eine Gehäuseverkleidung 4. Die Gehäuseverkleidung 4 ist an dem Hauptrahmen 3 lösbar befestigt. Die Gehäuseverkleidung 4 besteht aus mehreren Gehäuseteilen 31, 32, 33, 34, 35, 36, 37. Auf der Oberseite 46 ist die Dentalfräsmaschine 1 mit einem Gehäusedeckel 31 bedeckt. Ausgehend von der Oberseite 46 erstrecken sich eine erste Gehäusewand 33 und eine zweite Gehäusewand 34 bis zur Unterseite 47 der Dentalfräsmaschine 1. Auf der Vorderseite der Dentalfräsmaschine 1 ist eine Ladeklappe 5 vorgesehen, wobei die Ladeklappe 5 geöffnet werden kann, wodurch der Anwender Zugang zum Innenraum der Dentalfräsmaschine 1 erhält. Der Anwender kann bei geöffneter Ladeklappe 5 (Fig. 2) beispielsweise einen Rohling 40 in die Werkstückaufnahme 14 einlegen oder herausnehmen. Oberhalb der Ladeklappe 5 ist eine obere Frontblende 36 vorgesehen, die sich vorzugsweise bis zur Oberseite 46 der Dentalfräsmaschine 1 erstreckt. Unterhalb der Ladeklappe 5 ist vorzugsweise eine untere Frontblende 37 vorgesehen, die sich vorzugsweise bis zur Unterseite 47 der Dentalfräsmaschine 1 erstreckt. Auf der der Ladeklappe 5 gegenüberliegenden Seite ist die Dentalfräsmaschine 1 mit einer Gehäuserückwand 32 versehen. Somit bilden im vorliegenden Ausführungsbeispiel der Gehäusedeckel 31, die Gehäuserückwand 32, die erste Gehäuseseitenwand 33, die zweite Gehäuseseitenwand 34, die Ladeklappe 5, die obere Frontblende 36 und die untere Frontblende 37 Gehäuseteile 31, 32, 33, 34, 35, 36, 37 der Dentalfräsmaschine 1. Die Gehäuseverkleidung 4 dient im Wesentlichen zum Schutz vor Verschmutzung des Antriebssystems sowie weiteren Systemelementen der Dentalfräsmaschine 1. Ferner bildet die Gehäuseverkleidung 4 auch einen Schutz für den Bediener vor fahrbaren Teilen der Dentalfräsmaschine 1, wie beispielsweise den Motoren oder einzelne Achselemente, oder auch elektrischen Kontakten. Die einzelnen Gehäuseteile 31, 32, 33, 34, 35, 36, 37 sind an dem Hauptrahmen 3 ansteckbar. Es kann vorgesehen sein, zusätzliche Fixierungselemente zur Befestigung der Gehäuseteile 31, 32, 33, 34, 35, 36, 37 an dem Hauptrahmen 3 vorzusehen.

Wie in Fig. 1 schematisch angedeutet, umfasst die Dentalfräsmaschine 1 eine Steuereinrichtung 6. Die Steuereinrichtung 6 dient zur elektrischen Versorgung und Steuerung der Frässpindel 7 sowie dem Antriebssystem 11. Die Frässpindel 7 und das Antriebssystem 11 sind insbesondere über einen elektrischen Anschluss der Steuereinrichtung 6 verbunden.

Die erfindungsgemäße Dentalfräsmaschine 1 weist einen modularen Aufbau auf. Die Dentalfräsmaschine 1 besteht aus einem Basismodul 20, aus der Gehäuseverkleidung 4 und aus einer Gruppe von an das Basismodul 20 ansteckbaren Modulen 21. Das Basismodul 20 umfasst den Hauptrahmen 3. Die Gehäuseverkleidung 4 und die Gruppe aus Modulen 21 sind lösbar an dem Basismodul 20, insbesondere an dem Hauptrahmen 3 befestigt. Zudem sind die Gehäuseverkleidung 4 und die Gruppe aus Modulen 21 an das Basismodul 20 ansteckbar. Hierfür sind Steckverbindungen 16 vorgesehen. Dadurch wird eine einfache Montage wie auch Demontage der Dentalfräsmaschine 1 ermöglicht.

Dem Basismodul 20 zugeordnet sind ferner auch die Bauelemente, die einer komplizierten Montage und Einrichtung unterliegen und daher von einem geschulten Monteur oder Techniker, nicht hingegen vom Anwender montiert werden sollten. Hierzu zählen beispielsweise die Antriebssysteme 11 zur Positionierung der Frässpindel 7, also die x-, y-, z-Achsen der Dentalfräsmaschine 1.

Die Dentalfräsmaschine 1 weist eine Masse von weniger als 50 kg, insbesondere von weniger als 45 kg, vorzugsweise von weniger als 40 kg auf. Das Basismodul 20 weist eine Masse von weniger als 31,5 kg, vorzugsweise von weniger als 29 kg auf. Dadurch ist es möglich, das Basismodul 20 mittels Paketversand eines herkömmlichen Paketlieferanten zu versenden. Die maximale Masse eines Paketes liegt bei typischerweise 31,5 kg. Ist das zu versendende Objekt schwerer, wird dies als Sperrgut klassifiziert. Eine weitere Restriktion besteht in den Abmaßen des Hauptmoduls 20, die unterhalb der maximalen Paketmaße in Höhe von 120 cm^{∗}60 cm^{∗}60 cm liegen müssen. Das Hauptmodul 20 weist eine sich von der Oberseite 46 in Richtung der Unterseite 47 erstreckende Höhe h auf. Zur Einhaltung der genannten Restriktion ist das Hauptmodul 20 derart ausgebildet, dass die Höhe h des Hauptmoduls 20 höchstens 100 cm, vorzugsweise höchstens 80 cm, insbesondere höchstens 60 cm beträgt. Ferner weist das Hauptmodul 20 eine in Richtung von der ersten Gehäusewand 33 zur zweiten Gehäusewand 34 gemessene Breite b und eine in Richtung von der Ladeklappe 5 zur Gehäuserückwand 32 gemessene Tiefe c auf. Das Hauptmodul 20 ist derart ausgebildet, dass die Breite b und die Tiefe c des Hauptmoduls kleiner als 60 cm, vorzugsweise kleiner als 50 cm sind. Die Ausgestaltung des Hauptmoduls 20 mit entsprechend niedriger Masse sowie geringen Abmaßen erlaubt das Versenden des Hauptmoduls 20 mittels eines Paketversands. Selbige Restriktionen gelten selbstverständlich auch für die Gehäuseverkleidung 4 sowie für jedes Modul 21 aus der Gruppe von Modulen. Demnach ist die Gehäuseverkleidung 4 derart ausgebildet, dass die Masse der Gehäuseverkleidung 4 weniger als 31,5 kg, insbesondere weniger als 29 kg beträgt. Auch die Module 21 aus der Gruppe von Modulen sind derart ausgebildet, dass diese eine Masse von weniger als 31,5 kg, insbesondere weniger als 29 kg betragen. Sowohl die Maße der Gehäuseverkleidung 4 als auch die Maße der Module 21 aus der Gruppe von Modulen liegen unterhalb der maximalen Paketmaße von 120 cm^{∗}60 cm^{∗}60 cm. In der vorliegenden, besonders bevorzugten Ausführung der Dentalfräsmaschine 1 sind die Gehäuseverkleidung 4 und sämtliche Module 21 aus der Gruppe von Modulen derart ausgebildet, dass die Masse und die Maße der Gehäuseverkleidung 4 zusammen mit sämtlichen Modulen 21 aus der Gruppe von Modulen geringer als 31,5 kg respektive geringer als 120 cm^{∗}60 cm^{∗}60 cm ist. Somit können Gehäuseverkleidung 4 und sämtliche Module 21 in einem weiteren, einzigen Paket versendet werden.

Wie in Fig. 4 gezeigt, sind im bevorzugten Ausführungsbeispiel die Frässpindel 7, die Werkstückaufnahme 14 und die Steuereinrichtung 6 als Module 21 ausgebildet. Die Module bilden eine in sich abgeschlossene Funktionseinheit. Die Module 21 sind steckbar über eine Steckverbindung 16 an dem Basismodul 20, insbesondere an dem Hauptrahmen 3 befestigt. Es kann zweckmäßig sein, neben der Steckverbindung 16 weitere Fixierungselemente 19 vorzusehen. Ein solches Fixierungselement 19 kann beispielsweise eine Schraubverbindung sein.

Wie in Fig. 4 gezeigt, ist die als Modul 21 ausgebildete Steuereinrichtung 6 in das Basismodul 21 eingeschoben. An dem Basismodul 20 sind benachbart zu den Gehäuseseitenwänden 33, 34 auf der Unterseite 47 der Dentalfräsmaschine 1 jeweils eine Seitenführung 41 angeordnet. Die Seitenführung 41 enthält eine Haltenut 42, in welche die Steuereinrichtung 6 eingeschoben wird. Hierfür ist an der Steuereinrichtung 6 eine Bodenplatte 35 vorgesehen, die in eingestecktem Zustand der Steuereinrichtung 6 die Unterseite 47 der Dentalfräsmaschine 1 bildet. Im bevorzugten Ausführungsbeispiel ist die Steuerung 6 lediglich über ihre Bodenplatte 35 in die Seitenführungen 41 des Hauptrahmens 3 eingesteckt. Weitere Fixierelemente werden nicht benötigt. Zum einfachen Herausziehen der Steuereinrichtung 6 ist an der Bodenplatte 35 der Steuereinrichtung 6 ein dem Anwender zugänglicher Haltegriff 43 vorgesehen.

Die Steuereinrichtung 6 liegt auf einem Gehäuseboden 35 auf, der die Unterseite 47 der Dentalfräsmaschine 1 bildet. Die Steuereinrichtung 6 umfasst nicht näher dargestellte Anschlüsse zur Verbindung mit einer Energiequelle, insbesondere mit einem Stromnetz, mit einem Rechner, beispielsweise über einen USB-Port, und mit den Komponenten der Dentalfräsmaschine 1. Zur Verbindung mit den Komponenten, beispielsweise das Antriebssystem 11, der Dentalfräsmaschine 1 ist bevorzugt ein einziger Steckverbinder vorzusehen, der vorliegend als 96-poliger Stecker ausgebildet ist. Um also die Steuereinrichtung 6 an dem Basismodul 20 anzuschließen ist lediglich dieser einzige Stecker mit dem Basismodul 20 zu verbinden. Die Steuereinrichtung 6 und das Basismodul 21 sind derart zueinander ausgebildet, dass bei Einschieben der Steuereinrichtung 6 in das Basismodul 21 der Steckkontakt mit dem Steckverbinder zwischen der Steuereinrichtung 6 und dem Basismodul 21 automatisch erfolgt.

In der vorliegenden Ausführung der Dentalfräsmaschine 1 umfasst die Steuereinrichtung 6 ein integrales Netzteil. Es kann in einer alternativen Ausführung der Dentalfräsmaschine 1 auch zweckmäßig sein, ein externes Netzteil vorzusehen. Das externe Netzteil bildet ein von der Steuereinrichtung 6 separates Modul.

Auch die in Fig. 4 gezeigte Werkstückaufnahme 14 ist als ein Modul 21 ausgebildet. Die Werkstückaufnahme 14 wird über eine nicht näher dargestellte Steckverbindung im Innenraum der Dentalfräsmaschine 1 am Hauptrahmen 3 befestigt. Zusätzlich wird die Werkstückaufnahme 14 über nicht näher dargestellte Fixierungselemente, hier Schraubverbindungen an dem Hauptrahmen 3 fixiert.

Die in den Fig. 6 bis 8 dargestellte Frässpindel 7 ist als Modul 21 ausgebildet. Wie in Fig. 4 gezeigt, wird die Frässpindel 7 in eine Spindelaufnahme 44 eingesteckt. Die Spindelaufnahme 44 ist als Steckverbindung 16, im Ausführungsbeispiel mit zwei Klemmbacken ausgebildet. Die Spindelaufnahme 44 umfasst vorzugsweise eine einzige Klemmschraube, die hier ein zusätzliches Fixierelement 19 bildet. Über das Anziehen der Klemmschraube wird die Frässpindel 7 an ihrem Spindelgehäuse 23 in der Spindelaufnahme 44 fixiert. Die Spindelaufnahme 44 ist Teil des Basismoduls 20.

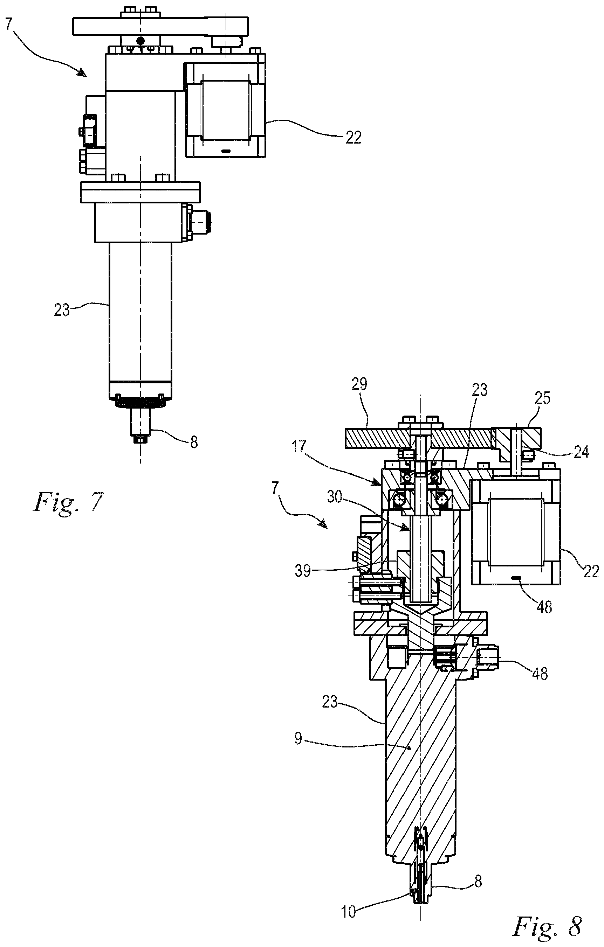

Wie in den Figuren 6 bis 8 dargestellt, umfasst die Frässpindel 7 eine Werkzeugaufnahme 10 zur Aufnahme eines Werkzeuges. Die Werkzeugaufnahme 10 ist wie in Fig. 8 schematisch angedeutet in der Spindel 8 vorgesehen. Die Werkzeugaufnahme 8 ist im bevorzugten Ausführungsbeispiel als eine Spannzange ausgebildet. Das Funktionsprinzip einer Spannzange ist allgemein bekannt. Eine Spannzangenaufnahme wird gegen einen Innenkegel gezogen, wobei sich die geschlitzte Spannzangenaufnahme verengt und den Schaft eines Werkzeuges klemmt. Die dafür benötigte Zugkraft wird über ein Federelement erzeugt. Üblicherweise werden derartige Spannzangen pneumatisch betätigt. Die vorliegende Ausführung sieht hingegen einen mechanischen Linearantrieb 17 vor, über welchen die Spannzangenaufnahme entgegen der Federkraft aus dem Innenkegel geschoben wird. In diesem Zustand ist die Spannzange geöffnet, so dass das Werkzeug in die Spannzangenaufnahme eingelegt oder aus dieser herausgenommen werden kann. Die Frässpindel 7 umfasst einen Antriebsmotor 22 für den mechanischen Linearantrieb 17, der im Ausführungsbeispiel als Schrittmotor ausgebildet ist. Der Antriebsmotor 22 für den Linearantrieb 17 ist am Spindelgehäuse 23 befestigt. Auf der Antriebswelle 24 des Antriebsmotors 22 sitzt ein Ritzel 25, welches wiederum ein Zahnrad 29 antreibt. Das Zahnrad 29 ist das Antriebsrad einer Kugelumlaufspindel 30, wobei sich die translatorisch bewegende Mutter 39 der Kugelumlaufspindel 30 mit der Spannzangenaufnahme wirkverbunden ist und diese betätigt. Durch die Verwendung eines mechanischen Linearantriebes 17 kann auf ein pneumatisches Betätigungssystem für die Spannzange verzichtet werden. Der Linearantrieb 17 kann in einer alternativen, ebenfalls erfindungsgemäßen Ausführung der Dentalfräsmaschine 1 als Trapezgewindespindel ausgebildet sein. Auch andere Bewegungsspindeln können zweckmäßig sein.

Zur Anbindung der Frässpindel 7 an die Steuereinrichtung 6 sind lediglich der Elektromotor 9 sowie der Antriebsmotor 22 über jeweils einen Stecker 48 anzuschließen. Es können vorzugsweise auch Sensoren an der Frässpindel 7, beispielsweise Anschlagssensoren, vorgesehen sein, die dann ebenfalls an der Steuereinrichtung 6 anzuschließen sind.

Das bevorzugte Ausführungsbeispiel der Dentalfräsmaschine 1 umfasst ein nicht näher dargestelltes Absaugsystem, welches zur Absaugung von Spänen und Staub dient. Als Quelle zur Erzeugung eines Absaugstroms, ist vorzugweise eine externe Absaugvorrichtung an der Dentalfräsmaschine 1 anzuschließen. Die Dentalfräsmaschine 1 sieht im Bereich der Ladeklappe 5 nicht näher dargestellte Öffnungen vor, über die Luft in den Innenraum der Dentalfräsmaschine 1 angesaugt werden kann. Der Luftstrom nimmt die Schmutzpartikel auf und strömt mit diesen aus der Dentalfräsmaschine 1 in die Absaugvorrichtung. Es kann alternativ auch vorgesehen sein, eine integrale Absaugvorrichtung vorzusehen. Diese ist dann ebenfalls als Modul zur einfachen Montage bzw. Demontage ausgebildet.

In einer weiteren, alternativen Ausführung der Dentalfräsmaschine 1 umfasst diese eine als Modul ausgebildete Nasseinheit zur Nassbearbeitung eines Werkstückes. Durch eine solche Nasseinheit können während der Bearbeitung die Werkstücke sowie das Werkzeug unter Zuführung einer Flüssigkeit gekühlt und gereinigt werden. In einer alternativen Ausführung der Dentalfräsmaschine 1 umfasst die Dentalfräsmaschine 1 ein als Modul ausgebildetes, nicht näher dargestelltes Werkstückmagazin.

## Patentansprüche

1. Dentalfräsmaschine,
umfassend
- ein Gehäuse (2),wobei das Gehäuse (2) einen Hauptrahmen (3) und eine Gehäuseverkleidung (4) umfasst,
- eine im Gehäuse (2) angeordnete Frässpindel (7),
- eine Werkstückaufnahme (14) zum Halten eines Werkstückes (40),
- ein im Gehäuse (2) angeordnetes Antriebssystem (11) zur Positionierung der Frässpindel (7),
- eine Steuereinrichtung (6) zur elektrischen Versorgung und Steuerung der Frässpindel (7) und dem Antriebssystem (11),
**dadurch gekennzeichnet, dass** die Dentalfräsmaschine (1) aus einem Basismodul (20), aus der Gehäuseverkleidung (4) und aus einer Gruppe von an das Basismodul (20) ansteckbaren Modulen (21) besteht, wobei der Hauptrahmen (3) Teil des Basismoduls (20) ist und die Gehäuseverkleidung (4) lösbar an dem Basismodul (20), insbesondere an dem Hauptrahmen (3), befestigt ist, wobei das Basismodul (20), die Gehäuseverkleidung (4) und jedes Modul (21) der Gruppe von Modulen jeweils eine Masse von weniger als 31,5 kg aufweisen.

2. Dentalfräsmaschine nach Anspruch 1,
**dadurch gekennzeichnet, dass** die Masse der Dentalfräsmaschine (1) weniger als 50kg, insbesondere weniger als 45kg, vorzugsweise weniger als 40kg beträgt.

3. Dentalfräsmaschine nach Anspruch 1 oder 2,
**dadurch gekennzeichnet, dass** jedes Modul (21) über eine Steckverbindung (16) an dem Basismodul (20) befestigt ist.

4. Dentalfräsmaschine nach einem der Ansprüche 1 bis 3,
**dadurch gekennzeichnet, dass** die Steuereinrichtung (6) als ein Modul (21) aus der Gruppe von Modulen ausgebildet ist.

5. Dentalfräsmaschine nach Anspruch 4,
**dadurch gekennzeichnet, dass** die Steuereinrichtung (6) über ein separat von der Steuereinrichtung (6) ausgebildetes Netzteil an einer Energiequelle angeschlossen ist, wobei das separat ausgebildete Netzteil als ein Modul (21) aus der Gruppe von Modulen ausgebildet ist.

6. Dentalfräsmaschine nach einem der Ansprüche 1 bis 5,
**dadurch gekennzeichnet, dass** die Gehäuseverkleidung (4) aus mehreren Gehäuseteilen (31, 32, 33, 34, 35, 36, 37) besteht.

7. Dentalfräsmaschine nach einem der Ansprüche 1 bis 6,
**dadurch gekennzeichnet, dass** die Frässpindel (7) als ein Modul (21) aus der Gruppe von Modulen ausgebildet ist.

8. Dentalfräsmaschine nach Anspruch 7,
**dadurch gekennzeichnet, dass** die Frässpindel (7) eine Werkzeugaufnahme (10) und einen mechanisch betriebenen Linearantrieb (17) zur Betätigung der Werkzeugaufnahme (10) umfasst.

9. Dentalfräsmaschine nach einem der Ansprüche 1 bis 8,
**dadurch gekennzeichnet, dass** die Werkstückaufnahme (14) als ein Modul (21) aus der Gruppe von Modulen ausgebildet ist.

10. Dentalfräsmaschine nach Anspruch 9,
**dadurch gekennzeichnet, dass** die Werkstückaufnahme (14) eine Schwenkachse (18) aufweist, um die ein in der Werkstückaufnahme (14) eingespannter Rohling durch das Antriebssystem (11) angetrieben schwenkbar ist.

11. Dentalfräsmaschine nach einem der Ansprüche 1 bis 10,
**dadurch gekennzeichnet, dass** die Dentalfräsmaschine (1) eine als Modul (21) aus der Gruppe von Modulen vorgesehene Absaugvorrichtung umfasst.

12. Dentalfräsmaschine nach einem der Ansprüche 1 bis 11,
**dadurch gekennzeichnet, dass** die Dentalfräsmaschine (1) eine als Modul (21) ausgebildete Nasseinheit zur Nassbearbeitung eines Werkstückes (40) umfasst.

13. Dentalfräsmaschine nach Anspruch 12,
**dadurch gekennzeichnet, dass** die Nasseinheit einen Wassertank, eine Wasserpumpe und ein Filtersystem umfasst.

14. Dentalfräsmaschine nach einem der Ansprüche 1 bis 13,
**dadurch gekennzeichnet, dass** die Dentalfräsmaschine (1) ein als Modul ausgebildetes Werkstückmagazin umfasst.
